# EUROPEAN PATENT APPLICATION

(11) **EP 3 616 887 A1**
(43) Date of publication of application: **04.03.2020**
(21) Application number: 18192126.3
(22) Date of filing: 31.08.2018
(51) Int. Cl.: B29C 64/393, B29C 64/371, B33Y 50/02, B29C 64/153, B22F 3/105

(54) **APPARATUS, CALIBRATION DEVICE AND CALIBRATION METHOD FOR ADDITIVELY MANUFACTURING THREE-DIMENSIONAL OBJECTS**

(71) Applicant: Concept Laser GmbH, 96215 Lichtenfels (DE)
(72) Inventor: Hunze, Stephan, Dr.-Ing., 96215 Lichtenfels (DE)
(74) Representative: Hafner & Kohl Patent- und Rechtsanwälte Partnerschaft mbB

(57) **Abstract**

Apparatus (1) for additively manufacturing three-dimensional objects by means of successive layerwise selective irradiation and consolidation of layers of a build material which can be consolidated by means of an energy beam (2), wherein the apparatus (1) comprises an irradiation device (3) for generating the energy beam (2) and a stream generating unit (7) for generating a gas stream (8) streaming through a process chamber (9) in which the additive manufacturing process is performed, wherein at least one determination device (13) is provided that is adapted to determine at least one gas parameter of the gas stream (8) inside the process chamber (9), wherein a calibration device (14) is adapted to calibrate and/or adjust the irradiation device (3) dependent on the at least one gas parameter, in particular for adjusting at least one irradiation parameter of the irradiation device (3).

## Description

The invention relates to an apparatus for additively manufacturing three-dimensional objects by means of successive layerwise selective irradiation and consolidation of layers of a build material which can be consolidated by means of an energy beam, wherein the apparatus comprises an irradiation device for generating the energy beam and a stream generating unit for generating a gas stream streaming through a process chamber in which the additive manufacturing process is performed.

Apparatuses for additively manufacturing three-dimensional objects are generally known from prior art. Usually, an inert gas atmosphere is generated in a process chamber in which the additive manufacturing process is performed. For generating the atmosphere inside the process chamber a stream generating unit is usually provided that is adapted to generate a stream of gas flowing through the process chamber. Via the gas stream it is, inter alia, possible to temper the process chamber and to load the gas stream with residues, such as soot, smoke and smolder and transport those residues out of the process chamber.

The energy beam that is used to irradiate the build material is usually focused on a build plane in which the build material is arranged to be irradiated. Hence, it is crucial that the energy beam is generated based on proper irradiation parameters to ensure that a correct amount of energy is deposited in the right position in each irradiation step of the manufacturing process. However, the energy beam used to irradiate the build material has to pass the atmosphere inside the process chamber and can therefore, be influenced by the gas stream, wherein aberrations can occur due to the gas stream. Thus, the influence of the gas stream on the energy beam may cause deviations that may negatively affect the irradiation process.

It is an object of the present invention to provide an improved apparatus for additively manufacturing three-dimensional objects, wherein negative influences of the gas stream on the irradiation process can be reduced or avoided.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy beam, in particular a laser beam. A respective build material can be a metal, ceramic or polymer powder. A respective apparatus can be an apparatus in which an application of build material and a consolidation of build material is performed separately, such as a selective laser sintering apparatus or a selective laser melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating unit, as described before, which is adapted to generate the gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the inventive apparatus comprises an irradiation device that is adapted to generate at least one energy beam and guide the energy beam across the build plane inside the process chamber, wherein the apparatus further comprises a stream generating unit that is adapted to generate a gas stream streaming through the process chamber. The invention is based on the idea that the apparatus comprises at least one determination device that is adapted to determine at least one gas parameter of the gas stream, preferably inside the process chamber, wherein a calibration device is adapted to calibrate and/or adjust the irradiation device dependent on the at least one gas parameter, in particular for adjusting at least one irradiation parameter of the irradiation device.

Thus, the determination device is used to determine one or more gas parameters of the gas stream that is generated inside the process chamber allowing for a determination whether or how the gas stream influences the energy beam or how the energy beam interacts with the generated gas stream, respectively. The irradiation parameter of the irradiation device generally allows for generating and guiding the energy beam, i.e. adjusting every parameter of the energy beam, such as the focal position of the energy beam, the position of the energy beam in the build plane, the intensity of the energy beam, the spot size or the spot shape, the intensity distribution and others. In other words, the irradiation parameter defines how the energy beam is generated, for example with which intensity, how it is guided onto the build plane and guided across the build plane, for example how the energy beam is focused and with which velocity and to which position(s) the energy beam is guided.

Determining the gas parameter allows for taking the effect of the gas stream on the energy beam into calculation, wherein the calibration device of the inventive apparatus can be used to calibrate and/or adjust the irradiation device dependent on the at least one determined gas parameter. Hence, via the calibration device it is possible to adjust the at least one irradiation parameter of the irradiation device, in particular to compensate the effects of the gas stream on the energy beam, for example compensate a deviation of the focal position or the positioning accuracy the gas stream has on the energy beam.

According to a first embodiment of the inventive apparatus, the calibration device may be adapted to calibrate and/or to adjust at least one irradiation parameter of the irradiation device, in particular for adjusting a focal position and/or an intensity of the energy beam, based on the at least one determined gas parameter. Hence, the calibration device can be used to calibrate and/or to adjust the irradiation device by adjusting one or more irradiation parameters. For example, the calibration device can adjust the focal position and/or an intensity of the energy beam by adjusting the corresponding irradiation parameter of the irradiation device. The calibration and/or or the adjustment of the at least one irradiation parameter can be performed based on the at least one determined gas parameter, wherein the effect of the gas stream or variations in the gas stream can be taken into calculation and the energy beam can be adjusted in that a possible (negative) effect of the gas stream on the energy beam can be compensated.

The at least one gas parameter that may be determined via the determination device may be or may relate to a streaming property of the gas stream that streams through the process chamber. As described before, different parameters, in particular gas parameters, of the gas stream may have an impact on how the energy beam is transmitted through the process chamber and is incident on the build plane. In other words, different properties of the gas stream, as represented by the at least one gas parameter, influence the behavior of the energy beam inside the process chamber. For example, varying one or more gas parameters of the gas stream may cause the energy beam to change, e.g. in terms of the focal position of the energy beam or the intensity of the energy beam that is received in the build plane and the like.

For example, the at least one gas parameter may be or may comprise a streaming direction and/or a streaming velocity and/or a variation of the streaming direction and/or a streaming velocity and/or a gas pressure. As described before, different gas parameters of the gas stream effect the properties, in particular the physical properties, of the gas inside the process chamber. For example, the refractive index of the gas can be varied by different properties of the gas stream, as represented by the gas parameter, such as the gas pressure, the streaming direction and/or or the streaming velocity, for instance. Of course, a variation of the at least one gas parameter also may vary the impact on the energy beam.

The at least one gas parameter may also relate to a composition of the gas stream, in particular to a chemical composition of the gas stream. As different gas streams or gases with different chemical composition might have a different refractive index or other properties, the composition of the gas stream can be represented in the at least one gas parameter. For example, a first gas with a first chemical composition may comprise a different refractive index than a second gas with a second chemical composition. It is also possible to take into calculation that the chemical composition of the gas stream may vary during the additive manufacturing process, for example by charging the gas stream with residues generated in the additive manufacturing process. Hence, the transmission of the energy beam can be changed by changing the composition of the gas stream.

According to another embodiment of the inventive apparatus, the at least one gas parameter may be or may comprise a concentration of at least one component of the gas stream, in particular residues and/or water contained in the gas stream. As described before, it is possible to take into calculation how the gas that is streamed through the process chamber is (chemically) composed. The different contents of the gas stream may have different impact on the energy beam, wherein, for example, residues and/or water may decrease the ability of the gas stream to transmit the energy beam or decrease the ability of the energy beam to pass a certain volume of the gas. In other words, the absorption behavior of the gas can be directly influenced via the composition of the gas stream, in particular the concentration of various contents in the gas stream. By taking the effect of the concentration of one or more components of the gas stream into calculation, it is possible to compensate a potential effect on the energy beam or the irradiation process, respectively. For example, if the concentration of at least one component of the gas stream indicates that a certain part of the energy beam will be absorbed in the gas stream, the intensity of the energy beam can be adjusted accordingly to compensate the absorption, for instance. Of course, the at least one parameter of the gas stream, such as the concentration of components of the gas stream, e.g. an oxygen content, does not necessarily involve a measurement of that component or concentration. It is also possible that the determination device determines the gas parameter based on a user input, i.e. from a control unit or the like.

The inventive apparatus may further be improved in that the calibration device may be adapted to calibrate and/or to adjust the irradiation device dependent on the difference between a reference value and an actual value of a beam parameter of the energy beam. Thus, a given or a defined reference value the beam parameter of the energy beam has to meet during the irradiation process, for example a defined focal position and/or a defined position and/or a defined intensity in the build plane, can be compared with an actual value of the beam parameter of the energy beam, for example an actual deposited energy/intensity in the build plane or an actual focal position and/or an actual position of the energy beam in the build plane. Dependent on the difference between the reference value and the actual value of the energy beam, the calibration device may calibrate and/or adjust the irradiation device.

For example, if a predefined reference value for the energy beam is not met, the calibration device may adjust the irradiation device accordingly in that a difference between the reference value and the actual value can be compensated. Thus, with a suitable detection device, such as a sensor, preferably a camera, it is possible to detect whether the energy beam meets the reference value or whether a difference between the reference value and an actual value of the beam parameter of the energy beam occurs. Therefore, a closed loop control of the energy beam can be performed, as the beam parameter may continuously be observed and, if a difference between the reference value and the actual value of the beam parameter occurs, an adjustment can be made to the irradiation device, as described before.

The inventive apparatus may further be improved in that the determination device may be movably arranged inside the process chamber, wherein the determination device may be movable into a determination position, in which the energy beam is incident on at least one sensor of the determination device. Hence, the determination device may be moved into a determination position in which the determination device may determine the gas parameter or in which the actual beam parameter may be determined. The determination device may, for instance, comprise a first determination unit for determining the gas parameter and a second determination unit for determining the at least one beam parameter of the energy beam. Preferably, both determination units may be moved separately, wherein a coupled movement is also possible.

For example, with the determination device in the determination position, the beam parameter may be determined, for example an intensity of the energy beam that is incident on at least one sensor (of the second determination unit) of the determination device. The determined beam parameter can afterwards be compared with a reference beam parameter, for example a reference intensity of the energy beam. If a difference between the reference beam parameter and the actual beam parameter is present, the calibration device may adjust the irradiation device accordingly. After the determination process has been performed, the determination device may again be moved out of the determination position, e.g. from the determination position into a park position.

The determination position may involve that the at least one sensor of the determination device is arranged in the intended focal plane, i.e. an actual focal plane in which the intended intensity distribution is generated via the irradiation device, if no aberrations are present. In this determination position, the energy beam can be scanned over the determination device, wherein it can be verified that the energy beam is incident on the sensor with the given beam parameters, such as the position, the focal position and the intensity, for instance. If the given beam parameters are not met, the calibration device may adjust the irradiation device accordingly, as described before, preferably in a closed loop process. It is also possible to store defined calibration values (compensation values) that have to be used to calibrate the irradiation device in that the energy beam meets predefined requirements, in particular in that the reference beam parameters are properly met.

The determination device may, for example, comprise at least one (second) determination unit, i.e. the determination unit for determining the at least one beam parameter, with a beam splitter that is adapted to split the energy beam into a first and a second determination path, wherein the first determination path extends from the beam splitter to a first determination element, in particular a photo diode, and the second determination path extends from the beam splitter to a second determination element, in particular a PSD-sensor or a line sensor or a quadrant photo diode. In particular, the sensors may be built as sensors with high response times or high local resolutions, in particular a PSD-sensor that can be driven at frequencies of 100 kHz or higher. By splitting the laser beam into two parts extending along the first and the second determination path, it is possible to determine different beam parameters simultaneously, such as whether a desired (intended) focal plane/position is met and whether the correct amount of energy is deposited.

The (second) determination unit may further comprise a confocal optical unit that is arranged in the first determination path. The confocal optical unit may, for example, comprise lenses and/or off-axis parabolic mirrors, an aperture and a photo diode for detecting the power or the intensity of the energy beam. In particular, a maximum detection procedure can be performed, wherein the maximum power/intensity of the energy beam is detected for finding the optimal focal position. Thus, it is possible to verify that the energy beam is guided to the correct position, for example via the quadrant photo diode (in the second determination path) and to verify that the focal position and the intensity of the energy beam is correctly adjusted. Otherwise, an adjustment of an irradiation parameter of the irradiation device via the calibration device can be deemed necessary.

According to another embodiment of the inventive apparatus, the determination unit may be movable into the process chamber in that the plane of the second determination element is positionable (can be positioned) in the focal plane of the energy beam. Hence, the plane of the second determination element, i.e. the plane on which the energy beam is incident on the second determination element, can be positioned in the focal plane of the energy beam. It is also possible that the determination device comprises more than one, for example at least two (second) determination units, wherein the at least two (second) determination units may be positioned in different positions inside the process chamber. Hence, it is either possible to move a single (second) determination unit into different positions or to have two (second) determination units arranged in different positions inside the process chamber. Of course, both approaches can be combined in that the at least two (second) determination units can be arranged movably inside the process chamber.

The determination device preferably comprises a platform in which the at least one (second) determination unit may at least partially be integrated, wherein the determination device may be adapted to position the platform in that the (determination) plane of the second determination element is positioned in the focal position of the energy beam, in particular for at least two different focal positions. Hence, it is possible to move the platform in that the plane of the second determination element lies in the focal position, wherein the atmosphere inside the process chamber can be taken into calculation, as the energy beam passes the gas stream streaming through the process chamber.

It is particularly possible that different gas parameters, for example different streaming directions and/or different streaming velocities can be adjusted to determine the influence of the gas stream on the energy beam. For example, if during the additive manufacturing process the at least one gas parameter is varied, for example by adjusting different streaming velocities and/or changing the concentration of at least one component of the gas stream, the effect of such a change to the at least one gas parameter may (in advance) be determined, wherein the effects can be compensated during the additive manufacturing process.

Besides, the invention relates to a calibration device for an apparatus for additively manufacturing three-dimensional objects by means of successive layerwise selective irradiation and consolidation of layers of a build material which can be consolidated by means of an energy beam, wherein the apparatus comprises an irradiation device for generating the energy beam and a process chamber in which the additive manufacturing process is performed, wherein at least one determination device is provided that is adapted to determine at least one gas parameter of the gas stream, preferably inside the process chamber, wherein the calibration device is adapted to calibrate and/or adjust the irradiation device dependent on the at least one gas parameter, in particular adapted to adjust at least one irradiation parameter of the irradiation device.

Further, the invention relates to a method for calibrating at least one irradiation device, in particular for an apparatus for additively manufacturing three-dimensional objects by means of successive layerwise selective irradiation and consolidation of layers of a build material which can be consolidated by means of an energy source, which apparatus comprises an irradiation device for generating the energy beam and a process chamber in which the additive manufacturing process is performed, wherein at least one gas parameter of the gas stream, preferably inside the process chamber, is determined, wherein the irradiation device is calibrated and/or adjusted dependent on the at least one gas parameter, in particular at least one irradiation parameter of the irradiation device is adjusted.

Self-evidently, all features, details and advantages described with respect to the inventive apparatus are fully transferable to the inventive method and the inventive calibration device. In particular, the inventive method may be performed on the inventive apparatus, preferably using an inventive calibration device.

Exemplary embodiments of the invention are described with reference to the Fig. The Fig. are schematic diagrams, wherein
- Fig. 1: shows an inventive apparatus; and
- Fig. 2: shows a detail of the inventive calibration device of the inventive apparatus from Fig. 1.

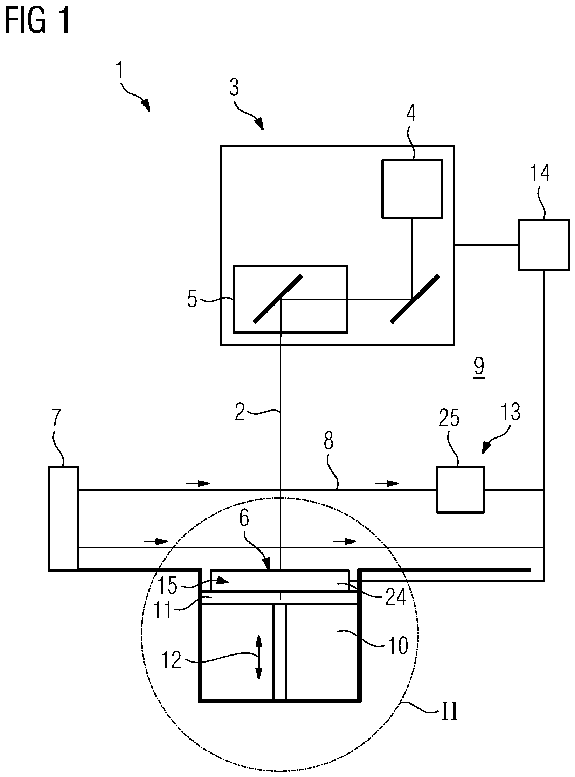

Fig. 1 shows an apparatus 1 for additively manufacturing three-dimensional objects by means of successive layerwise selective irradiation and consolidation of layers of a build material which can be consolidated by means of an energy beam 2. The energy beam 2 is generated via an irradiation device 3, comprising a beam source 4, for example a laser source, and a beam guiding unit 5 that is adapted to guide the energy beam 2 across a build plane 6. The apparatus 1 further comprises a stream generating unit 7 that is adapted to generate a gas stream 8 streaming through the process chamber 9, i.e. a chamber in which the additive manufacturing process takes place in a regular mode of operation of the apparatus 1 in which build material is arranged in the build plane 6 to be irradiated via the energy beam 2. The gas stream 8 can, for example, be used to temper the process chamber 9 or can be charged with residues generated in the additive manufacturing process, such as soot, smoke or smolder.

As can be derived from Fig. 1, the energy beam 2 is guided through the process chamber 9 and therefore, is transmitted through the gas stream 8 to reach the build plane 6. In this exemplary embodiment, the apparatus 1 comprises a build chamber 10 in which a build plate 11 (optional) is movably arranged (as indicated via arrow 12). Usually, the build plate 11 carries the build material and the object during the additive manufacturing process. Of course, the use of a build chamber 10 with the build plane 11 is merely optional and any other arbitrary way to additively build the three-dimensional object is also feasible.

The apparatus 1 comprises a determination device 13 adapted to determine at least one gas parameter of the gas stream 8 inside the process chamber 9. The determination device may comprise a first determination unit 25 for determining the gas parameter. The gas parameter may comprise a variety of properties of the gas stream 8, such as the streaming direction, the streaming velocity, the (chemical) composition of the gas stream 8, the concentration of various components of the gas stream 8, the gas pressure and the like.

The apparatus 1 further comprises a calibration device 14 which is adapted to calibrate and/or adjust the irradiation device 3 dependent on the at least one determined gas parameter, wherein the calibration device 14 may in particular adjust at least one irradiation parameter of the irradiation device 3. The term "irradiation parameter" relates to any arbitrary parameter of the irradiation device 3 that can be adjusted to vary a beam parameter of the energy beam 2, such as the intensity of the energy beam 2, the focal position, the position in the build plane 6 and others. Hence, dependent on the determined gas parameter that is determined via the determination device 13, the calibration device 14 may adjust the irradiation device 3, for example one or more irradiation parameters based on which the energy beam 2 is generated and/or guided or based on which any other parameter of the energy beam 2 is adjusted.

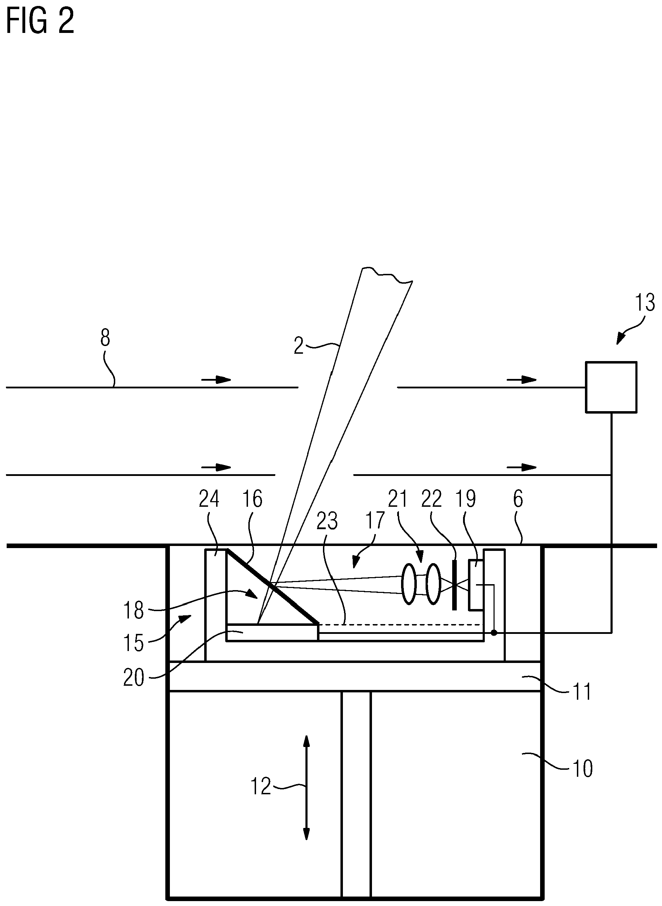

Further, the apparatus 1 comprises a second determination unit 15 for determining a beam parameter of the energy beam 2. The second determination unit 15 is depicted in detail in Fig. 2. The second determination unit 15 comprises a beam splitter 16 that is adapted to split the energy beam 2 into a first determination path 17 and a second determination path 18. The first determination path extends from the beam splitter 16 to a first determination element 19, in this exemplary embodiment a photo diode. The second determination path 18 extends from the beam splitter 16 to a second determination element 20, for example a PSD-sensor or a line sensor or a quadrant photo diode. In other words, the second determination element 20 is adapted to spatially resolve, whether the energy beam 2 is incident on the correct position. Thus, the second determination element 20 is adapted to determine the position of the energy beam 2, as, for example, comprised in the beam parameter of the energy beam 2.

The first determination element 19 is adapted to determine the intensity of the energy beam 2, wherein in the first determination path 17 a confocal optical unit 21 is arranged that allows for performing a maximum detection procedure, wherein the energy beam 2 following the first determination path 17 passes the aperture 22 with maximum intensity, if the energy beam 2 is focused onto the right focal plane 23. Otherwise, at least one part of the energy beam 2 following the first determination path 17 is absorbed via the aperture 22. The determination device 13 preferably comprises a platform 24 into which the second determination unit 15 is integrated.

As can further be derived from Fig. 2, the second determination unit 15 can be moved, wherein it is particularly possible to move the second determination unit 15 in that the intended focal plane 23 is positioned in the plane of the second determination element 20. Thus, it is possible to determine whether the energy beam 2 is incident in the right position, whether the correct focal position is met and whether the energy beam 2 depletes a suitable amount of energy in the build plane 6.

Of course, the inventive method may be performed on the inventive apparatus 1, preferably using an inventive calibration device 14 and an inventive determination device 13.

## Claims

1. Apparatus (1) for additively manufacturing three-dimensional objects by means of successive layerwise selective irradiation and consolidation of layers of a build material which can be consolidated by means of an energy beam (2), wherein the apparatus (1) comprises an irradiation device (3) for generating the energy beam (2) and a stream generating unit (7) for generating a gas stream (8) streaming through a process chamber (9) in which the additive manufacturing process is performed, **characterized by** at least one determination device (13) that is adapted to determine at least one gas parameter of the gas stream (8), preferably inside the process chamber (9), wherein a calibration device (14) is adapted to calibrate and/or adjust the irradiation device (3) dependent on the at least one gas parameter, in particular for adjusting at least one irradiation parameter of the irradiation device (3).

2. Apparatus according to claim 1, **characterized in that** the calibration device (14) is adapted to calibrate and/or to adjust at least one irradiation parameter of the irradiation device (3), in particular for adjusting a focal position and/or an intensity of the energy beam (2), based on the at least one determined gas parameter.

3. Apparatus according to claim 1 or 2, **characterized in that** the at least one gas parameter is or relates to a streaming property of the gas stream (8), preferably streaming through the process chamber (9).

4. Apparatus according to one of the preceding claims, **characterized in that** the at least one gas parameter is or comprises a streaming direction and/or a streaming velocity and/or a gas pressure and/or a variation of a streaming direction and/or a streaming velocity and/or a gas pressure.

5. Apparatus according to one of the preceding claims, **characterized in that** the at least one gas parameter relates to a composition of the gas stream (8), in particular to a chemical composition.

6. Apparatus according to one of the preceding claims, **characterized in that** the at least one gas parameter is or comprises a concentration of at least one component of the gas stream (8), in particular residues and/or water contained in the gas stream (8).

7. Apparatus according to one of the preceding claims, **characterized in that** the calibration device (14) is adapted to calibrate and/or adjust the irradiation device (3) dependent on a difference between a reference value and an actual value of a beam parameter of the energy beam (2).

8. Apparatus according to one of the preceding claims, **characterized in that** the determination device (13) is movably arranged inside the process chamber (9), wherein the determination device (13) is moveable into a determination position, in which the energy beam (2) is incident on at least one sensor of the determination device (13).

9. Apparatus according to one of the preceding claims, **characterized in that** the determination device (13) comprises at least one determination unit (15) with a beam splitter (16) that is adapted to split the energy beam (2) into a first and a second determination path (17, 18), wherein the first determination path (17) extends from the beam splitter (16) to a first determination element (19), in particular a photo diode, and the second determination path (18) extends from the beam splitter (16) to a second determination element (20), in particular a psd sensor or a line sensor or a quadrant photo diode.

10. Apparatus according to one of the preceding claims, **characterized in that** the determination unit (15) comprises a confocal optical unit (21) that is arranged in the first determination path (17).

11. Apparatus according to one of the preceding claims, **characterized in that** the determination unit (15) is moveable inside the process chamber (9) **in that** the plane of the second determination element (20) is positionable in the focal plane (23) of the energy beam (2).

12. Apparatus according to one of the preceding claims, **characterized in that** the determination device (13) comprises at least two determination units (15).

13. Apparatus according to one of the preceding claims, **characterized in that** the determination device (13) comprises a platform in which the at least one determination unit (15) is at least partially integrated, wherein the determination device (13) is adapted to position the platform (24) **in that** the plane of the second determination element (20) is positioned in the focal plane (23) of the energy beam (2), in particular for at least two different focal planes (23).

14. Calibration device (14) for an apparatus (1) for additively manufacturing three-dimensional objects by means of successive layerwise selective irradiation and consolidation of layers of a build material which can be consolidated by means of an energy beam (2), wherein the apparatus (1) comprises an irradiation device (3) for generating the energy beam (2) and a process chamber (9) in which the additive manufacturing process is performed, **characterized by** at least one determination device (13) that is adapted to determine at least one gas parameter of the gas, preferably inside the process chamber (9), wherein the calibration device (14) is adapted to calibrate and/or adjust the irradiation device (3) dependent on the at least one gas parameter, in particular adapted to adjust at least one irradiation parameter of the irradiation device (3).

15. Method for calibrating at least one irradiation device (3), in particular for an apparatus (1) for additively manufacturing three-dimensional objects by means of successive layerwise selective irradiation and consolidation of layers of a build material which can be consolidated by means of an energy source, which apparatus (1) comprises an irradiation device (3) for generating the energy beam (2) and a process chamber (9) in which the additive manufacturing process is performed, **characterized by** determining at least one gas parameter of the gas, preferably inside the process chamber (9) and calibrating and/or adjusting the irradiation device (3) dependent on the at least one gas parameter, in particular adjusting at least one irradiation parameter of the irradiation device (3).
